# EUROPEAN PATENT APPLICATION

(11) **EP 4 404 606 A2**
(43) Date of publication of application: **24.07.2024**
(21) Application number: 24180414.5
(22) Date of filing: 03.12.2019
(51) Int. Cl.: H04W 12/06

(54) **CONGESTION CONTROL ACROSS DIFFERENT PUBLIC LAND MOBILE NETWORKS**

(30) Priority: 05.12.2018 US 201862775757 P; 09.01.2019 US 201962790378 P
(62) Divisional of application: 19893707.0
(71) Applicant: Intel Corporation, Santa Clara, CA 95054 (US)
(72) Inventor: SHAN, Chang Hong, Shanghai 200030 (CN); GUPTA, Vivek, San Jose, 95138 (US)
(74) Representative: HGF

(57) **Abstract**

Systems, methods, and devices provide for congestion control across different PLMNs. An SMF processes a NAS session management (SM) request message from a UE. The NAS SM request message is associated with a S-NSSAI. In response to determining that the S-NSSAI is congested, the SMF generates a NAS SM response message for the UE. The NAS SM response message includes an indication of a PLMN and an SM back-off time value corresponding to the S-NSSAI. The UE decodes the NAS SM response message and associates the SM back-off time value for use with the PLMN. The UE waits (backs-off) until the SM back-off time is stopped or expires before initiating a session management procedure for the S-NSSAI in the indicated PLMN. However, if the UE selects another PLMN not included in the indicated list of PLMNs, the UE need not back-off and can initiate SM procedures for the S-NSSAI.

## Description

### CROSS-REFERENCE TO RELATED APPLICATION(S)

This application claims the benefit of U.S. Provisional Application No. 62/775,757 filed December 5, 2018 and U.S. Provisional Application No. 62/790,378 filed January 9, 2019, each of which is hereby incorporated by reference herein in its entirety.

### TECHNICAL FIELD

This application relates generally to wireless communication systems, and more specifically to congestion control.

### BACKGROUND

Wireless mobile communication technology uses various standards and protocols to transmit data between a base station and a wireless mobile device. Wireless communication system standards and protocols can include the 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard for wireless local area networks (WLAN), which is commonly known to industry groups as Wi-Fi. In 3GPP radio access networks (RANs) in LTE systems, the base station can include a RAN Node such as a Evolved Universal Terrestrial Radio Access Network (E-UTRAN) Node B (also commonly denoted as evolved Node B, enhanced Node B, eNodeB, or eNB) and/or Radio Network Controller (RNC) in an E-UTRAN, which communicate with a wireless communication device, known as user equipment (UE). In fifth generation (5G) wireless RANs, RAN Nodes can include a 5G Node, new radio (NR) node or g Node B (gNB).

RANs use a radio access technology (RAT) to communicate between the RAN Node and UE. RANs can include global system for mobile communications (GSM), enhanced data rates for GSM evolution (EDGE) RAN (GERAN), Universal Terrestrial Radio Access Network (UTRAN), and/or E-UTRAN, which provide access to communication services through a core network. Each of the RANs operates according to a specific 3GPP RAT. For example, the GERAN implements GSM and/or EDGE RAT, the UTRAN implements universal mobile telecommunication system (UMTS) RAT or other 3GPP RAT, and the E-UTRAN implements LTE RAT.

A core network can be connected to the UE through the RAN Node. The core network can include a serving gateway (SGW), a packet data network (PDN) gateway (PGW), an access network detection and selection function (ANDSF) server, an enhanced packet data gateway (ePDG) and/or a mobility management entity (MME).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example scenario in accordance with one embodiment.
FIG. 2 illustrates example messages in accordance with certain embodiments.
FIG. 3 illustrates an example UE-requested PDU session establishment procedure in accordance with one embodiment.
FIG. 4 illustrates an example UE-requested PDU session modification procedure in accordance with one embodiment.
FIG. 5 illustrates example NAS transport messages in accordance with one embodiment.
FIG. 6 illustrates a system in accordance with one embodiment.
FIG. 7 illustrates a device in accordance with one embodiment.
FIG. 8 illustrates example interfaces in accordance with one embodiment.
FIG. 9 illustrates components in accordance with one embodiment.
FIG. 10 illustrates a system in accordance with one embodiment.
FIG. 11 illustrates components in accordance with one embodiment.

### DETAILED DESCRIPTION

NAS level congestion control may be applied in general (i.e., for some or all NAS messages), per DNN, per S-NSSAI, per DNN and S-NSSAI, or for a specific group of UEs. "NAS" refers to Non-Access Stratum. "DNN" refers to Data Network Name. "S-NSSAI" refers to Single Network Slice Selection Assistance Information. The S-NSSAI is signaled by the UE to the network, and assists the network in selecting a particular Network Slice instance. An S-NSSAI includes: a Slice/Service type (SST), which refers to the expected Network Slice behavior in terms of features and services; and a Slice Differentiator (SD), which is an optional information that complements the Slice/Service type(s) to differentiate amongst multiple Network Slices of the same Slice/Service type. The S-NSSAI may be associated with a PLMN (e.g., PLMN ID) and have network-specific values or have standard values. An S-NSSAI is used by the UE in an access network in the PLMN that the S-NSSAI is associated with. "SST" refers to Slice/Service Type. "SD" refers to Slice Differentiator. "PLMN" refers to Public Land Mobile Network. "ID" refers to identifier.

NAS level congestion control is achieved by providing the UE a back-off time. To avoid that large numbers of UEs initiate deferred requests (almost) simultaneously, the 5GC may select each back-off time value so that the deferred requests are not synchronized. "5GC" refers to Fifth Generation Core network. When the UE receives a back-off time, the UE may not initiate any NAS signaling with regards to the applied congestion control until the back-off timer expires or the UE receives a mobile terminated request from the network, or the UE initiates signaling for emergency services or high priority access.

S-NSSAI based congestion control is for avoiding and handling of NAS signaling congestion for the UEs with a back-off time associated with or without an S-NSSAI, regardless of the presence of a DNN.

The UE associates the received back-off time with the S-NSSAI and DNN (i.e., no S-NSSAI and no DNN, no S-NSSAI, S-NSSAI only, an S-NSSAI and a DNN) which was included in an uplink NAS MM message carrying the corresponding NAS SM request message for the PLMN which is under congestion. "MM" refers to Mobility Management. "SM" refers to Session Management.

According to certain implantations, following are a few of the SMF and UE behaviors when an S-NSSAI (optionally with a DNN) is determined to be congested. "SMF" refers to Session Management Function. If an S-NSSAI is determined as congested, then the SMF may apply S-NSSAI based congestion control towards the UE for SM requests which includes an S-NSSAI, and provides a back-off time, an associated S-NSSAI, and optionally a DNN. Upon reception of a back-off time (or back-off time value) with an associated S-NSSAI and optionally a DNN, the UE takes the following actions: if the received back-off time is associated with an S-NSSAI only (i.e., not with a DNN) (e.g., timer T3585), the UE may not initiate any Session Management procedures for the congested S-NSSAI until the timer is stopped or expires; and if the received back-off time is associated with an S-NSSAI and a DNN (e.g., timer T3584), then the UE may not initiate any Session Management procedures for that combination of S-NSSAI and DNN until the timer is stopped or expires. This may apply, for example, on a per PLMN basis (i.e., not across PLMNs).

The AMF stores a DNN congestion back-off time on a per UE and congested DNN basis. "AMF" refers to Access and Mobility Management Function. The AMF stores an S-NSSAI congestion back-off time on a per UE, congested S-NSSAI, and optionally DNN basis.

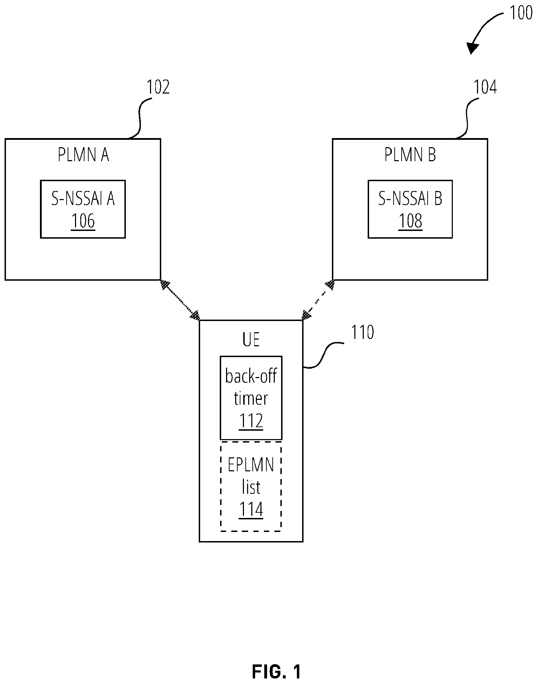

FIG. 1 illustrates an example scenario 100 for handling congestion across PLMN A 102 and a PLMN B 104 according to one embodiment. An S-NSSAI A 106 is a default S-NSSAI for the PLMN A 102, and an S-NSSAI B 108 is a default S-NSSAI for PLMN B 104. A UE 110 includes a back-off timer 112. In certain embodiments, the UE 110 also includes an EPLMN list 114. "EPLMN" refers to Equivalent PLMN. An EPLMN list is a list of PLMNs considered as equivalents to Registered PLMNs (RPLMNs) in terms of service provisioning. During PLMN selection, a UE may preferentially select a PLMN from the list. The EPLMN list allows a network to provide the UE with a list of PLMN identities. A PLMN is identified by the combination of Mobile Country Code (MCC), and Mobile Network Code (MNC) that the UE treats as equivalent for the purposes of PLMN selection, cell selection/reselection, and handover. The UE adds the PLMN of the current network to the received EPLMN list before storing it.

In the example shown in FIG. 1, the UE 110 registers to PLMN A 102 and sends an SM request without indicating an S-NSSAI. The PLMN A 102 rejects the SM request with a back-off time value due to the S-NSSAI only based congestion control. Thus, the SM request to the S-NSSAI A 106 in the PLMN A 102 is under congestion control. The example includes the UE 110 changing the PLMN to the PLMN B 104 where the default S-NSSAI is the S-NSSAI B 108, wherein the S-NSSAI B 108 is not under the S-NSSAI only based congestion control.

In this example, if the back-off timer 112 is running due to S-NSSAI based congestion control and if UE 110 has not provided any S-NSSAI, then previous solutions do not provide for handling S-NSSAI based congestion on a PLMN change with regard to session management messages. Similarly, previous solutions do not provide for handling S-NSSAI and DNN based congestion control on a PLMN change with regard to any new session management messages initiated by the UE 110.

If the UE 110 enters a new PLMN while the back-off timer 112 is running due to any type of congestion, and the new PLMN (e.g., PLMN B 104) is not equivalent to the PLMN (e.g., PLMN A 102) where the UE 110 started the back-off timer, then the UE 110 stops the back-off timer 112 when initiating 5G procedures in the new PLMN, except for the EPLMN. The UE 110 can then use any of the configured NSSAI or default NSSAI in various procedures. "NSSAI" refers to Network Slice Selection Assistance Information. The NSSAI is a collection of S-NSSAIs. For example, 3GPP may allow up to eight S-NSSAIs in the NSSAI sent in signaling messages between the UE and the network. This means a single UE may be served by at most eight Network Slices at a time.

By way of example, when the UE 110 is roaming and V-SMF in VPLMN (home routed roaming) or SMF in VPLMN (local breakout roaming) is congested for an S-NSSAI and optionally with a DNN, the UE 110 may decide to change the serving VPLMN to another (e.g., select from the EPLMN list or another PLMN) in case the UE 110 clearly knows only the current serving VPLMN and not the HPLMN is congested. "V-SMF" refers to visited Session Management Function. "VPLMN" refers to Visited Public Land Mobile Network. "HPLMN" refers to Home Public Land Mobile Network. When the UE 110 registers in another Serving VPLMN, the SM (Session Management) back-off time related to the previous serving VPLMN is stopped and the UE 110 is allowed to use the same S-NSSAI and optionally DNN in the newly selected serving VPLMN. In certain embodiments, to support these operations, the UE 110 stores the PLMN value along with the SM back-off time value returned by the AMF/SMF.

In certain embodiments, an SMF sends a NAS SM reject message to the UE 110 that includes a back-off time value corresponding to an S-NSSAI and optionally a DNN to the UE 110, along with a corresponding indication of a PLMN ID or VPLMN/HPLM. In addition, or in other embodiments, the NAS SM reject message sent from the SMF to the UE 110 includes an indication of whether the back-off time value applies to an EPLMN list.

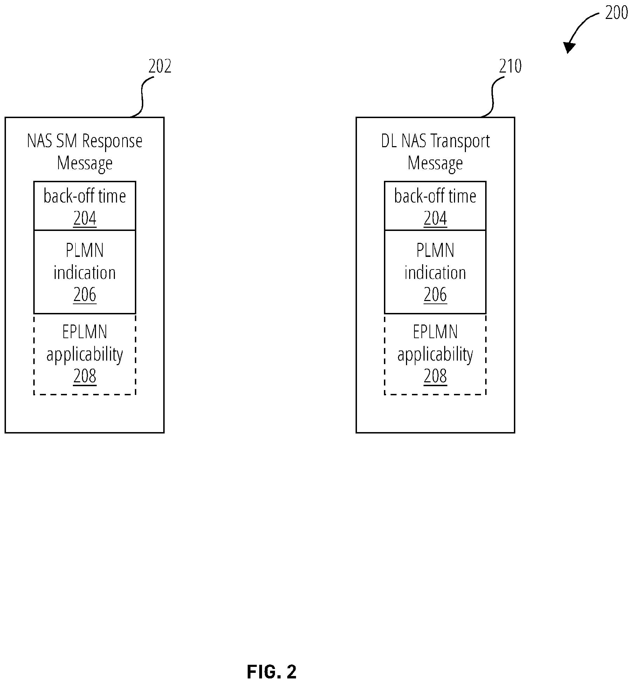

For example, FIG. 2 illustrates example messages 200 according to certain embodiments. The example messages 200 include a NAS SM Response Message 202 comprising a back-off time 204, a PLMN indication 206, and an indication of EPLMN applicability 208. The NAS SM Response Message 202 may be sent, for example, from an SMF to the UE 110. The NAS SM Response Message 202 may comprise, for example, a PDU session establishment reject message or a PDU session modification reject message. "PDU" refers to Protocol Data Unit.

The back-off time 204 and the PLMN indication 206 correspond to an S-NSSAI and (optionally) a DNN. The indication of EPLMN applicability 208 indicates whether the back-off time 204 also applies to the EPLMN list 114. The PLMN indication 206 may comprise one or more PLMN IDs. The PLMN indication 206 may indicate, for example, a VPLMN or an HPLMN.

FIG. 2 also illustrates a DL NAS Transport Message 210 comprising the back-off time 204, the 206, and the indication of EPLMN applicability 208. "DL" refers to downlink. The DL NAS Transport Message 210 may be sent, for example, from an AMF to the UE 110. In certain embodiments, the DL NAS Transport Message 210 carries or encapsulates a NAS session management message or the NAS SM Response Message 202.

Based on the PLMN indication 206, the UE 110 determines which PLMN the received back-off time 204 applies to. In certain embodiments, when the UE 110 receives indication of EPLMN applicability 208, the UE 110 determines whether the received back-off time 204 applies to the EPLMN list 114.

In certain embodiments, when an SMF determines there is congestion corresponding to an S-NSSAI and optionally a DNN when receiving the NAS SM (Session Management) message (i.e., PDU Session Establishment Request, PDU Session Modification Request), in the NAS SM response message (i.e., PDU Session Establishment Reject, PDU Session Modification Reject), the SMF includes the SM back-off time value for an S-NSSAI or for a combination of S-NSSAI and DNN and an indication of PLMN (e.g., whether the back-off time is for VPLMN or HPLMN, or PLMN ID(s), etc.) and/or an indication of EPLMN applicability indicating whether the back-offer time applies to EPLMN list when the back-off time value is for VPLMN in roaming case or for HPLMN in non-roaming case.

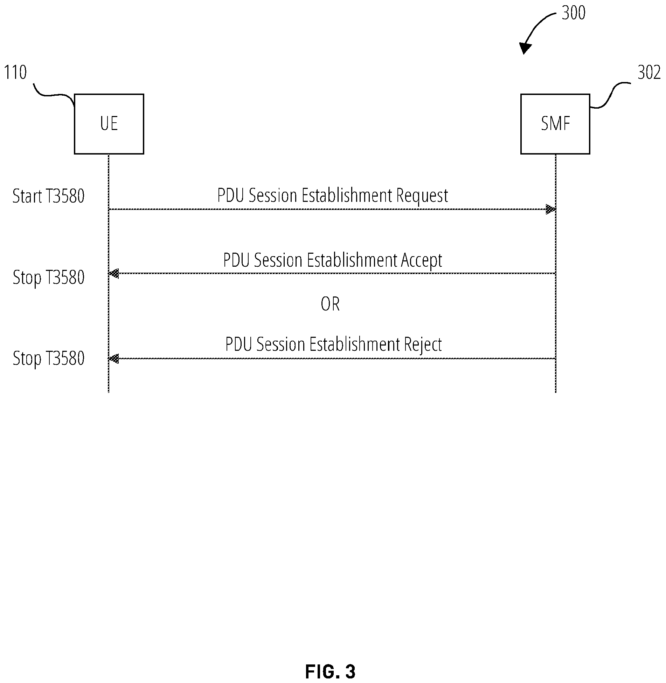

For example, FIG. 3 illustrates an example UE-requested PDU session establishment procedure 300 wherein an SMF 302 sends, to a UE 110, an indication of PLMN along with an SM back-off time value corresponding to an S-NSSAI and (optionally) a DNN in a NAS SM response message according to one embodiment. The example UE-requested PDU session establishment procedure 300 includes the UE 110 sending a PDU session establishment request to the SMF 302 and starting a T3580 timer (used for 5GS session management). "5GS" refers to 5G System. The SMF 302 responds with either a PDU session establishment accept message or a PDU session establishment reject message. When the SMF 302 sends the SM back-off time value corresponding to an S-NSSAI and optionally a DNN to the UE 110, a corresponding indication of PLMN ID or VPLMN/HPLMN and whether it also applies to the EPLMN list are included in the NAS session management establishment reject message. The UE waits (backs-off) until the SM back-off timer is stopped or expires before initiating a session management procedure for the S-NSSAI in the indicated PLMN. However, if the UE selects another PLMN not included in the indicated list of PLMNs, the UE need not back-off and can initiate SM procedures for the S-NSSAI.

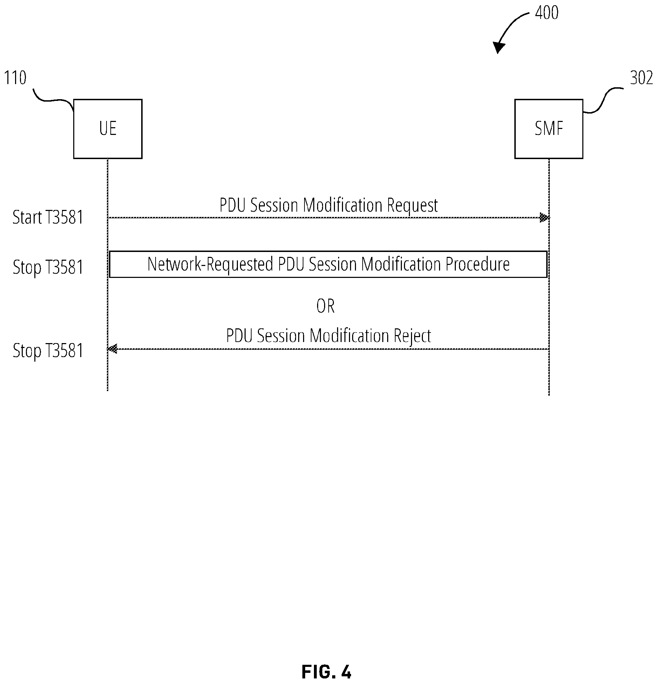

As another example, FIG. 4 illustrates an example UE-requested PDU session modification procedure 400 wherein an SMF 302 sends, to a UE 110, an indication of PLMN along with an SM back-off time value corresponding to an S-NSSAI and (optionally) a DNN in a NAS SM response message according to one embodiment. The example UE-requested PDU session modification procedure 400 includes the UE 110 sending a PDU session modification request to the SMF 302 and starting a T3581 timer (used for 5GS session management). Either a network-requested PDU session modification procedure is performed or the SMF 302 sends a PDU session modification reject message. When the SMF 302 sends the SM back-off time value corresponding to an S-NSSAI and optionally a DNN to the UE 110, a corresponding indication of PLMN ID or VPLMN/HPLMN, and whether it also applies to the EPLMN list are included in the NAS session modification reject message.

When the UE 110 receives the indication of PLMN, the UE 110 knows which PLMN this back-off time value applies to. Similarly, when the UE 110 receives a new indication of EPLMN applicability, it knows whether the back-off time value applies to the EPLMN list.

In another embodiment, an AMF provides an indication of PLMN (e.g., whether the back-off time is for VPLMN or HPLMN, or PLMN ID(s), etc.) and/or an indication of EPLMN applicability indicating whether the back-offer time value applies to EPLMN list when the back-off time value is for VPLMN in roaming case or for HPLMN in non-roaming case when the AMF receives the Namf_Communication_N1N2MessageTransfer (as described in clause 4.3.2.2.1 of 3GPP TS 23.502) from SMF.

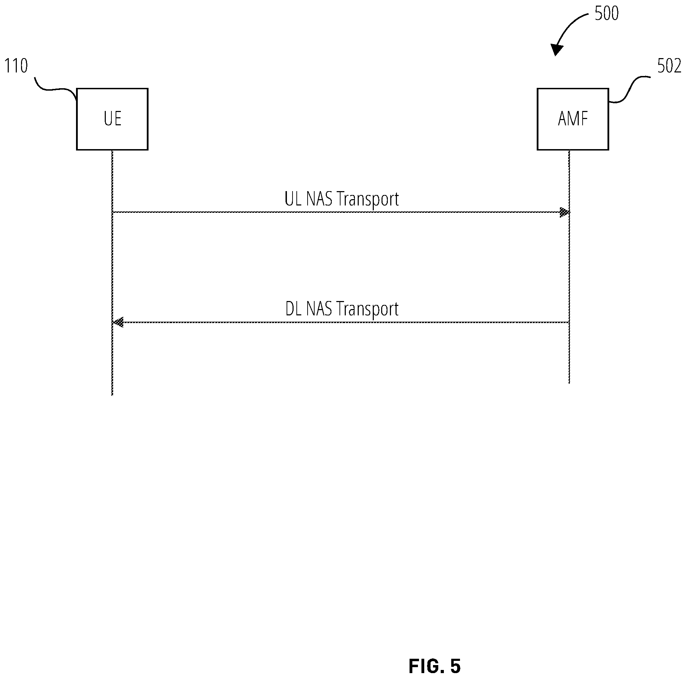

For example, FIG. 5 illustrates example NAS transport messages 500 between a UE 110 and an AMF 502 according to one embodiment. A UE 110 includes an SM message in UL NAS Transport, by setting the payload container type IE to "N1 SM information"; and sets the payload container IE to the 5GSM message and sends it to the AMF 502. "UL" refers to uplink. If there is congestion, then the AMF 502 returns the SM message in a DL NAS Transport message and sets the 5GMM Cause IE to an appropriate value such as 5GMM cause #22 "Congestion, or 5GMM cause #67 "insufficient resources for specific slice and DNN" or 5GMM cause #69 "insufficient resources for specific slice".

### Example Systems and Apparatuses

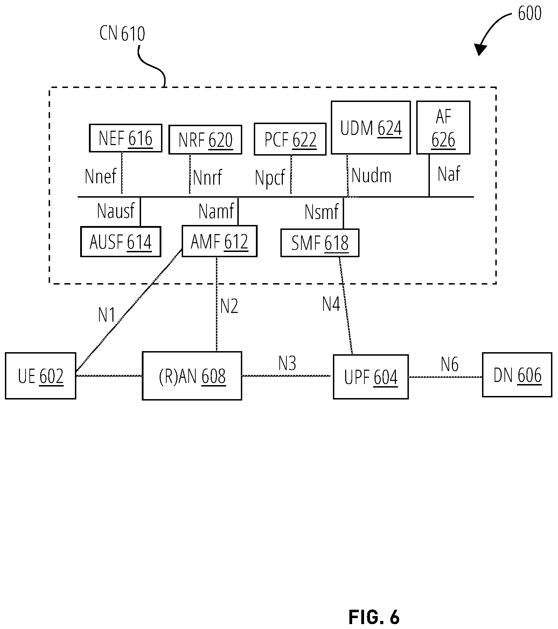

FIG. 6 illustrates an architecture of a system 600 of a network in accordance with some embodiments. The system 600 is shown to include a UE 602; a 5G access node or RAN node (shown as (R)AN node 608); a User Plane Function (shown as UPF 604); a Data Network (DN 606), which may be, for example, operator services, Internet access or 3rd party services; and a 5G Core Network (5GC) (shown as CN 610).

The CN 610 may include an Authentication Server Function (AUSF 614); a Core Access and Mobility Management Function (AMF 612); a Session Management Function (SMF 618); a Network Exposure Function (NEF 616); a Policy Control Function (PCF 622); a Network Function (NF) Repository Function (NRF 620); a Unified Data Management (UDM 624); and an Application Function (AF 626). The CN 610 may also include other elements that are not shown, such as a Structured Data Storage network function (SDSF), an Unstructured Data Storage network function (UDSF), and the like.

The UPF 604 may act as an anchor point for intra-RAT and inter-RAT mobility, an external PDU session point of interconnect to DN 606, and a branching point to support multi-homed PDU session. The UPF 604 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 604 may include an uplink classifier to support routing traffic flows to a data network. The DN 606 may represent various network operator services, Internet access, or third party services.

The AUSF 614 may store data for authentication of UE 602 and handle authentication related functionality. The AUSF 614 may facilitate a common authentication framework for various access types.

The AMF 612 may be responsible for registration management (e.g., for registering UE 602, etc.), connection management, reachability management, mobility management, and lawful interception of AMF-related events, and access authentication and authorization. AMF 612 may provide transport for SM messages for the SMF 618, and act as a transparent proxy for routing SM messages. AMF 612 may also provide transport for short message service (SMS) messages between UE 602 and an SMS function (SMSF) (not shown by FIG. 6). AMF 612 may act as Security Anchor Function (SEA), which may include interaction with the AUSF 614 and the UE 602, receipt of an intermediate key that was established as a result of the UE 602 authentication process. Where USIM based authentication is used, the AMF 612 may retrieve the security material from the AUSF 614. AMF 612 may also include a Security Context Management (SCM) function, which receives a key from the SEA that it uses to derive access-network specific keys. Furthermore, AMF 612 may be a termination point of RAN CP interface (N2 reference point), a termination point of NAS (NI) signaling, and perform NAS ciphering and integrity protection.

AMF 612 may also support NAS signaling with a UE 602 over an N3 interworking -function (IWF) interface. The N3IWF may be used to provide access to untrusted entities. N3IWF may be a termination point for the N2 and N3 interfaces for control plane and user plane, respectively, and as such, may handle N2 signaling from SMF and AMF for PDU sessions and QoS, encapsulate/de-encapsulate packets for IPSec and N3 tunneling, mark N3 user-plane packets in the uplink, and enforce QoS corresponding to N3 packet marking taking into account QoS requirements associated to such marking received over N2. N3IWF may also relay uplink and downlink control-plane NAS (NI) signaling between the UE 602 and AMF 612, and relay uplink and downlink user-plane packets between the UE 602 and UPF 604. The N3IWF also provides mechanisms for IPsec tunnel establishment with the UE 602.

The SMF 618 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 618 may include the following roaming functionality: handle local enforcement to apply QoS SLAs (VPLMN); charging data collection and charging interface (VPLMN); lawful intercept (in VPLMN for SM events and interface to LI System); support for interaction with external DN for transport of signaling for PDU session authorization/authentication by external DN.

The NEF 616 may provide means for securely exposing the services and capabilities provided by 3GPP network functions for third party, internal exposure/re-exposure, Application Functions (e.g., AF 626), edge computing or fog computing systems,
etc. In such embodiments, the NEF 616 may authenticate, authorize, and/or throttle the AFs. NEF 616 may also translate information exchanged with the AF 626 and information exchanged with internal network functions. For example, the NEF 616 may translate between an AF-Service-Identifier and an internal 5GC information. NEF 616 may also receive information from other network functions (NFs) based on exposed capabilities of other network functions. This information may be stored at the NEF 616 as structured data, or at a data storage NF using a standardized interfaces. The stored information can then be re-exposed by the NEF 616 to other NFs and AFs, and/or used for other purposes such as analytics.

The NRF 620 may support service discovery functions, receive NF Discovery Requests from NF instances, and provide the information of the discovered NF instances to the NF instances. NRF 620 also maintains information of available NF instances and their supported services.

The PCF 622 may provide policy rules to control plane function(s) to enforce them, and may also support unified policy framework to govern network behavior. The PCF 622 may also implement a front end (FE) to access subscription information relevant for policy decisions in a UDR of UDM 624.

The UDM 624 may handle subscription-related information to support the network entities' handling of communication sessions, and may store subscription data of UE 602. The UDM 624 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 622 . UDM 624 may also support SMS management, wherein an SMS-FE implements the similar application logic as discussed previously.

The AF 626 may provide application influence on traffic routing, access to the Network Capability Exposure (NCE), and interact with the policy framework for policy control. The NCE may be a mechanism that allows the 5GC and AF 626 to provide information to each other via NEF 616, which may be used for edge computing implementations. In such implementations, the network operator and third party services may be hosted close to the UE 602 access point of attachment to achieve an efficient service delivery through the reduced end-to-end latency and load on the transport network. For edge computing implementations, the 5GC may select a UPF 604 close to the UE 602 and execute traffic steering from the UPF 604 to DN 606 via the N6 interface. This may be based on the UE subscription data, UE location, and information provided by the AF 626. In this way, the AF 626 may influence UPF (re)selection and traffic routing. Based on operator deployment, when AF 626 is considered to be a trusted entity, the network operator may permit AF 626 to interact directly with relevant NFs.

As discussed previously, the CN 610 may include an SMSF, which may be responsible for SMS subscription checking and verification, and relaying SM messages to/from the UE 602 to/from other entities, such as an SMS-GMSC/IWMSC/SMS-router. The SMS may also interact with AMF 612 and UDM 624 for notification procedure that the UE 602 is available for SMS transfer (e.g., set a UE not reachable flag, and notifying UDM 624 when UE 602 is available for SMS).

The system 600 may include the following service-based interfaces: Namf: Service-based interface exhibited by AMF; Nsmf: Service-based interface exhibited by SMF; Nnef: Service-based interface exhibited by NEF;
Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 600 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an NS reference point may be between the PCF and the AF; an N7 reference point may be between the PCF and the SMF; an N11 reference point between the AMF and SMF; etc. In some embodiments, the CN 610 may include an Nx interface, which is an inter-CN interface between the MME (e.g., MME(s) 914) and the AMF 612 in order to enable interworking between CN 610 and CN 906.

Although not shown by FIG. 6, the system 600 may include multiple RAN nodes (such as (R)AN node 608) wherein an Xn interface is defined between two or more (R)AN node 608 (e.g., gNBs and the like) that connecting to 5GC 410, between a (R)AN node 608 (e.g., gNB) connecting to CN 610 and an eNB, and/or between two eNBs connecting to CN 610.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 602 in a connected mode (e.g., CM-CONNECTED) including functionality to manage the UE mobility for connected mode between one or more (R)AN node 608. The mobility support may include context transfer from an old (source) serving (R)AN node 608 to new (target) serving (R)AN node 608; and control of user plane tunnels between old (source) serving (R)AN node 608 to new (target) serving (R)AN node 608.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be same or similar to the user plane and/or control plane protocol stack(s) shown and described herein.

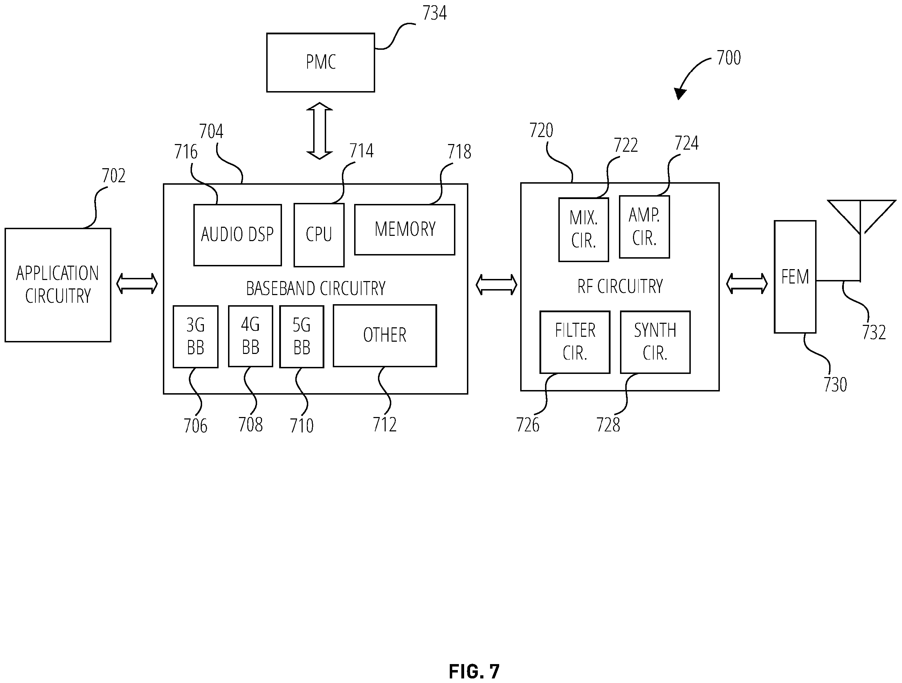

FIG. 7 illustrates example components of a device 700 in accordance with some embodiments. In some embodiments, the device 700 may include application circuitry 702, baseband circuitry 704, Radio Frequency (RF) circuitry (shown as RF circuitry 720), front-end module (FEM) circuitry (shown as FEM circuitry 730), one or more antennas 732, and power management circuitry (PMC) (shown as PMC 734) coupled together at least as shown. The components of the illustrated device 700 may be included in a UE or a RAN node. In some embodiments, the device 700 may include fewer elements (e.g., a RAN node may not utilize application circuitry 702, and instead include a processor/controller to process IP data received from an EPC). In some embodiments, the device 700 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 700. In some embodiments, processors of application circuitry 702 may process IP data packets received from an EPC.

The baseband circuitry 704 may include circuitry such as, but not limited to, one or more single-core or multi-core processors. The baseband circuitry 704 may include one or more baseband processors or control logic to process baseband signals received from a receive signal path of the RF circuitry 720 and to generate baseband signals for a transmit signal path of the RF circuitry 720. The baseband circuitry 704 may interface with the application circuitry 702 for generation and processing of the baseband signals and for controlling operations of the RF circuitry 720. For example, in some embodiments, the baseband circuitry 704 may include a third generation (3G) baseband processor (3G baseband processor 706), a fourth generation (4G) baseband processor (4G baseband processor 708), a fifth generation (5G) baseband processor (5G baseband processor 710), or other baseband processor(s) 712 for other existing generations, generations in development or to be developed in the future (e.g., second generation (2G), sixth generation (6G), etc.). The baseband circuitry 704 (e.g., one or more of baseband processors) may handle various radio control functions that enable communication with one or more radio networks via the RF circuitry 720. In other embodiments, some or all of the functionality of the illustrated baseband processors may be included in modules stored in the memory 718 and executed via a Central Processing Unit (CPU 714). The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, or constellation mapping/demapping functionality. In some embodiments, encoding/decoding circuitry of the baseband circuitry 704 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include a digital signal processor (DSP), such as one or more audio DSP(s) 716. The one or more audio DSP(s) 716 may include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) or other wireless metropolitan area networks (WMAN), a wireless local area network (WLAN), or a wireless personal area network (WPAN). Embodiments in which the baseband circuitry 704 is configured to support radio communications of more than one wireless protocol may be referred to as multi-mode baseband circuitry.

The RF circuitry 720 may enable communication with wireless networks using modulated electromagnetic radiation through a non-solid medium. In various embodiments, the RF circuitry 720 may include switches, filters, amplifiers, etc. to facilitate the communication with the wireless network. The RF circuitry 720 may include a receive signal path which may include circuitry to down-convert RF signals received from the FEM circuitry 730 and provide baseband signals to the baseband circuitry 704. The RF circuitry 720 may also include a transmit signal path which may include circuitry to up-convert baseband signals provided by the baseband circuitry 704 and provide RF output signals to the FEM circuitry 730 for transmission.

In some embodiments, the receive signal path of the RF circuitry 720 may include mixer circuitry 722, amplifier circuitry 724 and filter circuitry 726. In some embodiments, the transmit signal path of the RF circuitry 720 may include filter circuitry 726 and mixer circuitry 722. The RF circuitry 720 may also include synthesizer circuitry 728 for synthesizing a frequency for use by the mixer circuitry 722 of the receive signal path and the transmit signal path. In some embodiments, the mixer circuitry 722 of the receive signal path may be configured to down-convert RF signals received from the FEM circuitry 730 based on the synthesized frequency provided by synthesizer circuitry 728. The amplifier circuitry 724 may be configured to amplify the down-converted signals and the filter circuitry 726 may be a lowpass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, the mixer circuitry 722 of the receive signal path may comprise passive mixers, although the scope of the embodiments is not limited in this respect.

In some embodiments, the mixer circuitry 722 of the transmit signal path may be configured to up-convert input baseband signals based on the synthesized frequency provided by the synthesizer circuitry 728 to generate RF output signals for the FEM circuitry 730. The baseband signals may be provided by the baseband circuitry 704 and may be filtered by the filter circuitry 726.

In some embodiments, the mixer circuitry 722 of the receive signal path and the mixer circuitry 722 of the transmit signal path may include two or more mixers and may be arranged for quadrature downconversion and upconversion, respectively. In some embodiments, the mixer circuitry 722 of the receive signal path and the mixer circuitry 722 of the transmit signal path may include two or more mixers and may be arranged for image rejection (e.g., Hartley image rejection). In some embodiments, the mixer circuitry 722 of the receive signal path and the mixer circuitry 722 may be arranged for direct downconversion and direct upconversion, respectively. In some embodiments, the mixer circuitry 722 of the receive signal path and the mixer circuitry 722 of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 720 may include analog-to-digital converter (ADC) and digital-to-analog converter (DAC) circuitry and the baseband circuitry 704 may include a digital baseband interface to communicate with the RF circuitry 720.

In some dual-mode embodiments, a separate radio IC circuitry may be provided for processing signals for each spectrum, although the scope of the embodiments is not limited in this respect.

In some embodiments, the synthesizer circuitry 728 may be a fractional-N synthesizer or a fractional N/N+1 synthesizer, although the scope of the embodiments is not limited in this respect as other types of frequency synthesizers may be suitable. For example, synthesizer circuitry 728 may be a delta-sigma synthesizer, a frequency multiplier, or a synthesizer comprising a phase-locked loop with a frequency divider.

The synthesizer circuitry 728 may be configured to synthesize an output frequency for use by the mixer circuitry 722 of the RF circuitry 720 based on a frequency input and a divider control input. In some embodiments, the synthesizer circuitry 728 may be a fractional N/N+1 synthesizer.

In some embodiments, frequency input may be provided by a voltage controlled oscillator (VCO), although that is not a requirement. Divider control input may be provided by either the baseband circuitry 704 or the application circuitry 702 (such as an applications processor) depending on the desired output frequency. In some embodiments, a divider control input (e.g., N) may be determined from a look-up table based on a channel indicated by the application circuitry 702.

Synthesizer circuitry 728 of the RF circuitry 720 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, the synthesizer circuitry 728 may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 720 may include an IQ/polar converter.

The FEM circuitry 730 may include a receive signal path which may include circuitry configured to operate on RF signals received from one or more antennas 732, amplify the received signals and provide the amplified versions of the received signals to the RF circuitry 720 for further processing. The FEM circuitry 730 may also include a transmit signal path which may include circuitry configured to amplify signals for transmission provided by the RF circuitry 720 for transmission by one or more of the one or more antennas 732. In various embodiments, the amplification through the transmit or receive signal paths may be done solely in the RF circuitry 720, solely in the FEM circuitry 730, or in both the RF circuitry 720 and the FEM circuitry 730.

In some embodiments, the FEM circuitry 730 may include a TX/RX switch to switch between transmit mode and receive mode operation. The FEM circuitry 730 may include a receive signal path and a transmit signal path. The receive signal path of the FEM circuitry 730 may include an LNA to amplify received RF signals and provide the amplified received RF signals as an output (e.g., to the RF circuitry 720). The transmit signal path of the FEM circuitry 730 may include a power amplifier (PA) to amplify input RF signals (e.g., provided by the RF circuitry 720), and one or more filters to generate RF signals for subsequent transmission (e.g., by one or more of the one or more antennas 732).

In some embodiments, the PMC 734 may manage power provided to the baseband circuitry 704. In particular, the PMC 734 may control power-source selection, voltage scaling, battery charging, or DC-to-DC conversion. The PMC 734 may often be included when the device 700 is capable of being powered by a battery, for example, when the device 700 is included in a UE. The PMC 734 may increase the power conversion efficiency while providing desirable implementation size and heat dissipation characteristics.

FIG. 7 shows the PMC 734 coupled only with the baseband circuitry 704. However, in other embodiments, the PMC 734 may be additionally or alternatively coupled with, and perform similar power management operations for, other components such as, but not limited to, the application circuitry 702, the RF circuitry 720, or the FEM circuitry 730.

In some embodiments, the PMC 734 may control, or otherwise be part of, various power saving mechanisms of the device 700. For example, if the device 700 is in an RRC_Connected state, where it is still connected to the RAN node as it expects to receive traffic shortly, then it may enter a state known as Discontinuous Reception Mode (DRX) after a period of inactivity. During this state, the device 700 may power down for brief intervals of time and thus save power.

If there is no data traffic activity for an extended period of time, then the device 700 may transition off to an RRC_Idle state, where it disconnects from the network and does not perform operations such as channel quality feedback, handover, etc. The device 700 goes into a very low power state and it performs paging where again it periodically wakes up to listen to the network and then powers down again. The device 700 may not receive data in this state, and in order to receive data, it transitions back to an RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 702 and processors of the baseband circuitry 704 may be used to execute elements of one or more instances of a protocol stack. For example, processors of the baseband circuitry 704, alone or in combination, may be used to execute Layer 3, Layer 2, or Layer 1 functionality, while processors of the application circuitry 702 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

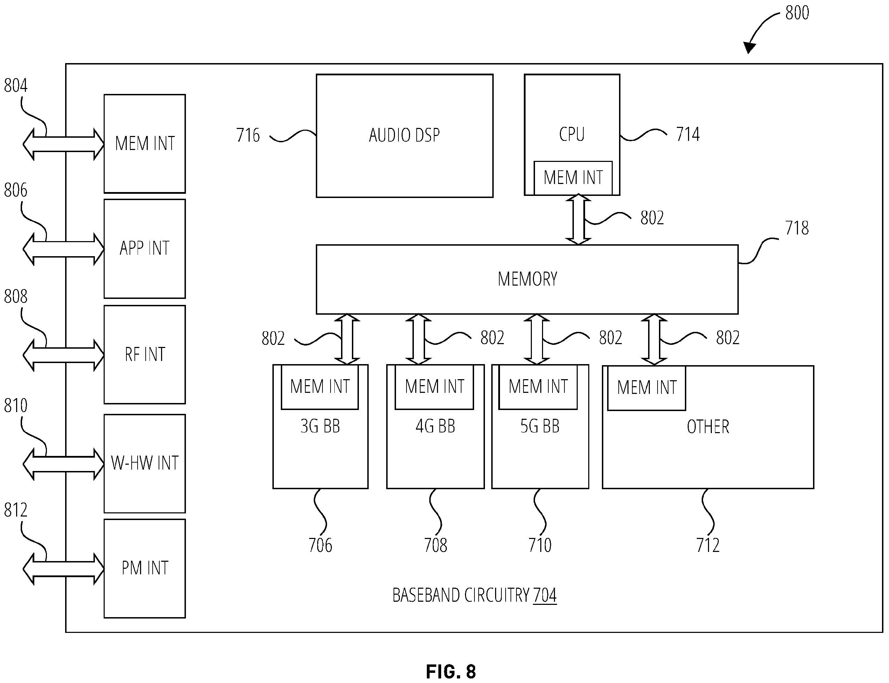

FIG. 8 illustrates example interfaces 800 of baseband circuitry in accordance with some embodiments. As discussed above, the baseband circuitry 704 of FIG. 7 may comprise 3G baseband processor 706, 4G baseband processor 708, 5G baseband processor 710, other baseband processor(s) 712, CPU 714, and a memory 718 utilized by said processors. As illustrated, each of the processors may include a respective memory interface 802 to send/receive data to/from the memory 718.

The baseband circuitry 704 may further include one or more interfaces to communicatively couple to other circuitries/devices, such as a memory interface 804 (e.g., an interface to send/receive data to/from memory external to the baseband circuitry 704), an application circuitry interface 806 (e.g., an interface to send/receive data to/from the application circuitry 702 of FIG. 7), an RF circuitry interface 808 (e.g., an interface to send/receive data to/from RF circuitry 720 of FIG. 7), a wireless hardware connectivity interface 810 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 812 (e.g., an interface to send/receive power or control signals to/from the PMC 734.

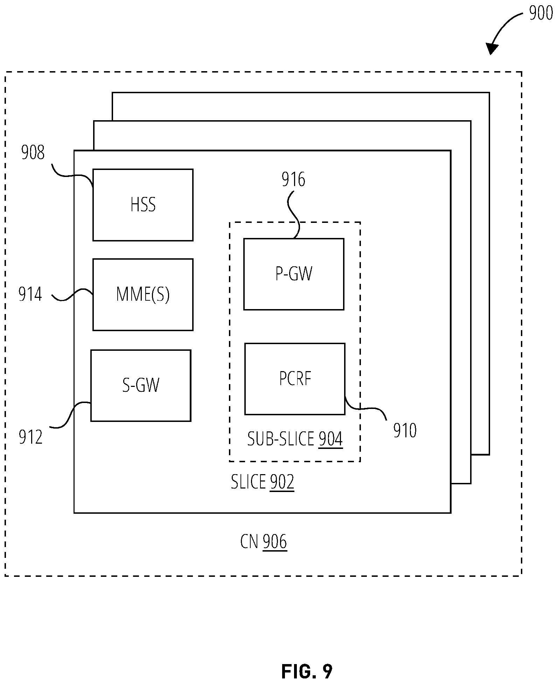

FIG. 9 illustrates components 900 of a core network in accordance with some embodiments. The components of the CN 906 may be implemented in one physical node or separate physical nodes including components to read and execute instructions from a machine-readable or computer-readable medium (e.g., a non-transitory machine-readable storage medium). In some embodiments, Network Functions Virtualization (NFV) is utilized to virtualize any or all of the above described network node functions via executable instructions stored in one or more computer readable storage mediums (described in further detail below). A logical instantiation of the CN 906 may be referred to as a network slice 902 (e.g., the network slice 902 is shown to include the HSS 908, the MME(s) 914, and the S-GW 912). A logical instantiation of a portion of the CN 906 may be referred to as a network sub-slice 904 (e.g., the network sub-slice 904 is shown to include the P-GW 916 and the PCRF 910).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

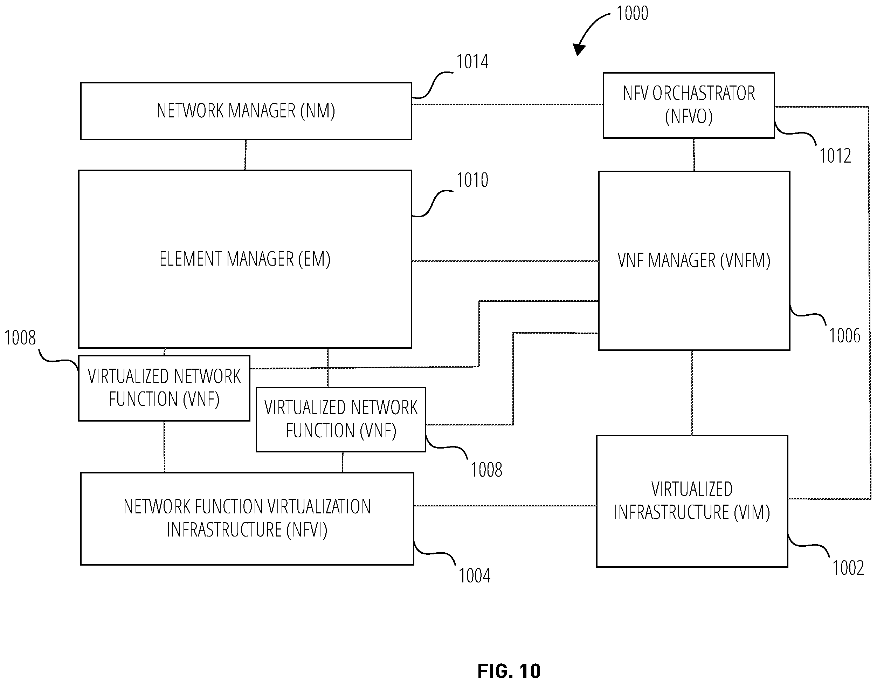

FIG. 10 is a block diagram illustrating components, according to some example embodiments, of a system 1000 to support NFV. The system 1000 is illustrated as including a virtualized infrastructure manager (shown as VIM 1002), a network function virtualization infrastructure (shown as NFVI 1004), a VNF manager (shown as VNFM 1006), virtualized network functions (shown as VNF 1008), an element manager (shown as EM 1010), an NFV Orchestrator (shown as NFVO 1012), and a network manager (shown as NM 1014).

The VIM 1002 manages the resources of the NFVI 1004. The NFVI 1004 can include physical or virtual resources and applications (including hypervisors) used to execute the system 1000. The VIM 1002 may manage the life cycle of virtual resources with the NFVI 1004 (e.g., creation, maintenance, and tear down of virtual machines (VMs) associated with one or more physical resources), track VM instances, track performance, fault and security of VM instances and associated physical resources, and expose VM instances and associated physical resources to other management systems.

The VNFM 1006 may manage the VNF 1008. The VNF 1008 may be used to execute EPC components/functions. The VNFM 1006 may manage the life cycle of the VNF 1008 and track performance, fault and security of the virtual aspects of VNF 1008. The EM 1010 may track the performance, fault and security of the functional aspects of VNF 1008. The tracking data from the VNFM 1006 and the EM 1010 may comprise, for example, performance measurement (PM) data used by the VIM 1002 or the NFVI 1004. Both the VNFM 1006 and the EM 1010 can scale up/down the quantity of VNFs of the system 1000.

The NFVO 1012 may coordinate, authorize, release and engage resources of the NFVI 1004 in order to provide the requested service (e.g., to execute an EPC function, component, or slice). The NM 1014 may provide a package of end-user functions with the responsibility for the management of a network, which may include network elements with VNFs, non-virtualized network functions, or both (management of the VNFs may occur via the EM 1010).

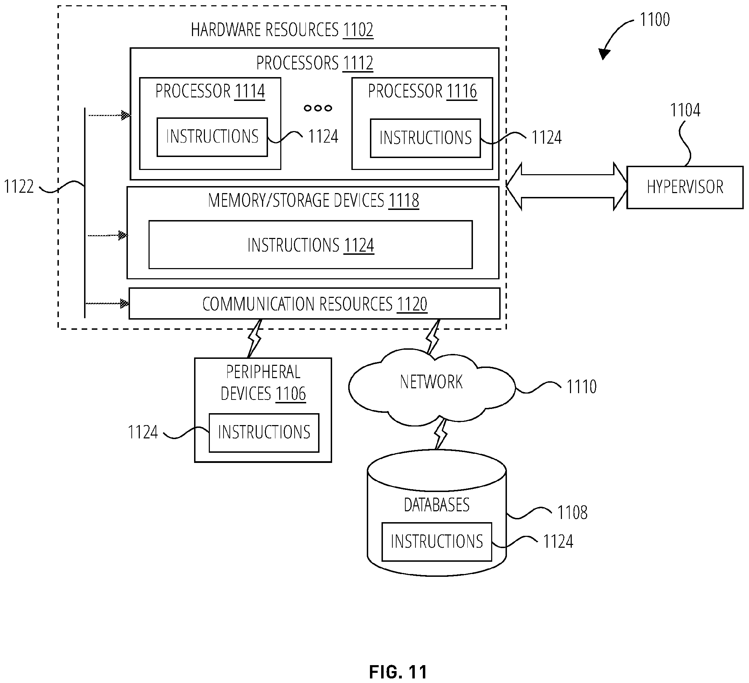

FIG. 11 is a block diagram illustrating components 1100, according to some example embodiments, able to read instructions from a machine-readable or computer-readable medium (e.g., a non-transitory machine-readable storage medium) and perform any one or more of the methodologies discussed herein. Specifically, FIG. 11 shows a diagrammatic representation of hardware resources 1102 including one or more processors 1112 (or processor cores), one or more memory/storage devices 1118, and one or more communication resources 1120, each of which may be communicatively coupled via a bus 1122. For embodiments where node virtualization (e.g., NFV) is utilized, a hypervisor 1104 may be executed to provide an execution environment for one or more network slices/sub-slices to utilize the hardware resources 1102.

The processors 1112 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 1114 and a processor 1116.

The memory/storage devices 1118 may include main memory, disk storage, or any suitable combination thereof. The memory/storage devices 1118 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 1120 may include interconnection or network interface components or other suitable devices to communicate with one or more peripheral devices 1106 or one or more databases 1108 via a network 1110. For example, the communication resources 1120 may include wired communication components (e.g., for coupling via a Universal Serial Bus (USB)), cellular communication components, NFC components, Bluetooth^{®} components (e.g., Bluetooth^{®} Low Energy), Wi-Fi^{®} components, and other communication components.

Instructions 1124 may comprise software, a program, an application, an applet, an app, or other executable code for causing at least any of the processors 1112 to perform any one or more of the methodologies discussed herein. The instructions 1124 may reside, completely or partially, within at least one of the processors 1112 (e.g., within the processor's cache memory), the memory/storage devices 1118, or any suitable combination thereof. Furthermore, any portion of the instructions 1124 may be transferred to the hardware resources 1102 from any combination of the peripheral devices 1106 or the databases 1108. Accordingly, the memory of the processors 1112, the memory/storage devices 1118, the peripheral devices 1106, and the databases 1108 are examples of computer-readable and machine-readable media.

For one or more embodiments, at least one of the components set forth in one or more of the preceding figures may be configured to perform one or more operations, techniques, processes, and/or methods as set forth in the Example Section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Example Section

The following examples pertain to further embodiments.

Example 1 is a non-transitory computer-readable storage medium. The computer-readable storage medium includes instructions that when executed by a processor of a session management function (SMF), cause the processor to: process a non-access stratum (NAS) session management (SM) request message from a user equipment (UE), the NAS SM request message associated with a single network slice selection assistance information (S-NSSAI); in response to the NAS SM session management message, determine congestion corresponding to the S-NSSAI; and in response to determining that the S-NSSAI is congested, generate a NAS SM response message for the UE, the NAS SM response message comprising a first indication of a public land mobile network (PLMN) and an SM back-off time value corresponding to the S-NSSAI.

Example 2 is the computer-readable storage medium of Example 1, wherein to determine the congestion corresponding the S-NSSAI further comprises to determine that the congestion corresponds to a data network name (DNN), and wherein the first indication of the PLMN and the SM back-off time value corresponding to the S-NSSAI further correspond to the DNN.

Example 3 is the computer-readable storage medium of Example 1, wherein the NAS SM response message further comprises a second indication of equivalent PLMN (EPLMN) applicability, wherein the second indication of EPLMN applicability indicates whether the back-off time value applies to an EPLMN list.

Example 4 is the computer-readable storage medium of Example 1, wherein the first indication of the PLMN comprises one or more PLMN identifiers (IDs).

Example 5 is the computer-readable storage medium of Example 1, wherein the first indication of the PLMN identifies a visited PLMN (VPLMN).

Example 6 is the computer-readable storage medium of Example 1, wherein the first indication of the PLMN identifies a home PLMN (HPLMN).

Example 7 is the computer-readable storage medium of Example 1, wherein the NAS SM response message comprises a protocol data unit (PDU) session establishment reject message.

Example 8 is the computer-readable storage medium of Example 1, wherein the NAS SM response message comprises a protocol data unit (PDU) session modification reject message.

Example 9 is an apparatus for a user equipment (UE). The apparatus includes a memory interface and a processor. The memory interface is to send or receive, to or from a memory device, a session management (SM) back-off time value. The processor is to: encode a (NAS) SM request message associated with a single network slice selection assistance information (S-NSSAI); decode a NAS SM response message comprising a first indication of a public land mobile network (PLMN) and the SM back-off time value corresponding to the S-NSSAI; and associate the SM back-off time value for use with the PLMN of the first indication.

Example 10 is the apparatus of Example 9, wherein the NAS SM response message further comprises a second indication of equivalent PLMN (EPLMN) applicability, wherein the second indication of EPLMN applicability indicates whether the back-off time value applies to an EPLMN list, and wherein the processor is further configured to associate the SM back-off time value for use with PLMNs in the EPLMN list.

Example 11 is the apparatus of Example 9, wherein the processor is further configured to, for the PLMN of the first indication, wait until a timer running the SM back-off time value is stopped or expires before initiating a session management procedure for the S-NSSAI.

Example 12 is the apparatus of Example 11, wherein the processor is further configured to, for a different PLMN, disregard the SM back-off time value.

Example 13 is the apparatus of Example 9, wherein the first indication of the PLMN and the SM back-off time value further corresponds to a data network name (DNN), and wherein the processor is further configured to: if the PLMN of the first indication is selected, wait until a timer running the SM back-off time value is stopped or expires before initiating a session management procedure for the S-NSSAI; and if a different PLMN is selected, initiate the session management procedure for the S-NSSAI without waiting for the timer running the SM back-off time value to stop or expire.

Example 14 is the apparatus of Example 9, wherein the first indication of the PLMN comprises one or more PLMN identifiers (IDs).

Example 15 is the apparatus of Example 9, wherein the first indication of the PLMN identifies a visited PLMN (VPLMN).

Example 16 is the apparatus of Example 9, wherein the first indication of the PLMN identifies a home PLMN (HPLMN).

Example 17 is the apparatus of Example 9, wherein the NAS SM response message comprises a protocol data unit (PDU) session establishment reject message.

Example 18 is the apparatus of Example 9, wherein the NAS SM response message comprises a protocol data unit (PDU) session modification reject message.

Example 19 is the apparatus of Example 9, wherein the NAS SM response message is received from a session management function (SMF).

Example 20 is the apparatus of Example 9, wherein the NAS SM response message is encapsulated in a downlink (DL) NAS transport message received from an access and mobility management function (AMF).

Example 21 is a method for an access and mobility management function (AMF). The method includes: determining that a single network slice selection assistance information (S-NSSAI) is congested for non-access stratum (NAS) signaling; generating a NAS downlink (DL) transport message comprising a first indication of a public land mobile network (PLMN) and a session management (SM) back-off time value corresponding to the S-NSSAI; and sending the NAS DL transport message to a user equipment (UE).

Example 22 is the method of Example 21, wherein the NAS DL transport message carries a NAS session management message to reject an SM request message from the UE.

Example 23 is the method of Example 21, wherein the NAS DL transport message further indicates that the first indication of the PLMN and the SM back-off time value are associated with a data network name (DNN).

Example 24 is the method of Example 21, wherein the NAS DL transport message further comprises a second indication of equivalent PLMN (EPLMN) applicability, wherein the second indication of EPLMN applicability indicates whether the back-off time value applies to an EPLMN list.

Example 25 is the method of Example 21, wherein the first indication of the PLMN comprises one or more PLMN identifiers (IDs).

Example 26 is the method of Example 21, wherein the first indication of the PLMN identifies a visited PLMN (VPLMN).

Example 27 is the method of Example 21, wherein the first indication of the PLMN identifies a home PLMN (HPLMN).

Any of the above described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters/attributes/aspects/etc. of one embodiment can be used in another embodiment. The parameters/attributes/aspects/etc. are merely described in one or more embodiments for clarity, and it is recognized that the parameters/attributes/aspects/etc. can be combined with or substituted for parameters/attributes/etc. of another embodiment unless specifically disclaimed herein.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

The following section of the description relates to further examples. The numbered paragraphs in this section are not claims. The claims are set forth below in the later section headed "claims".
1. A non-transitory computer-readable storage medium, the computer-readable storage medium including instructions that when executed by a processor of a session management function (SMF), cause the processor to:
   process a non-access stratum (NAS) session management (SM) request message from a user equipment (UE), the NAS SM request message associated with a single network slice selection assistance information (S-NSSAI);
   in response to the NAS SM session management message, determine congestion corresponding to the S-NSSAI; and
   in response to determining that the S-NSSAI is congested, generate a NAS SM response message for the UE, the NAS SM response message comprising a first indication of a public land mobile network (PLMN) and an SM back-off time value corresponding to the S-NSSAI.
2. The computer-readable storage medium of clause 1, wherein to determine the congestion corresponding the S-NSSAI further comprises to determine that the congestion corresponds to a data network name (DNN), and wherein the first indication of the PLMN and the SM back-off time value corresponding to the S-NSSAI further correspond to the DNN.
3. The computer-readable storage medium of clause 1, wherein the NAS SM response message further comprises a second indication of equivalent PLMN (EPLMN) applicability, wherein the second indication of EPLMN applicability indicates whether the back-off time value applies to an EPLMN list.
4. The computer-readable storage medium of clause 1, wherein the first indication of the PLMN comprises one or more PLMN identifiers (IDs).
5. The computer-readable storage medium of clause 1, wherein the first indication of the PLMN identifies a visited PLMN (VPLMN).
6. The computer-readable storage medium of clause 1, wherein the first indication of the PLMN identifies a home PLMN (HPLMN).
7. The computer-readable storage medium of clause 1, wherein the NAS SM response message comprises a protocol data unit (PDU) session establishment reject message.
8. The computer-readable storage medium of clause 1, wherein the NAS SM response message comprises a protocol data unit (PDU) session modification reject message.
9. An apparatus for a user equipment (UE), the apparatus comprising:
   a memory interface to send or receive, to or from a memory device, a session management (SM) back-off time value; and
   a processor to:
      encode a (NAS) SM request message associated with a single network slice selection assistance information (S-NSSAI);
      decode a NAS SM response message comprising a first indication of a public land mobile network (PLMN) and the SM back-off time value corresponding to the S-NSSAI; and
      associate the SM back-off time value for use with the PLMN of the first indication.
10. The apparatus of clause 9, wherein the NAS SM response message further comprises a second indication of equivalent PLMN (EPLMN) applicability, wherein the second indication of EPLMN applicability indicates whether the back-off time value applies to an EPLMN list, and wherein the processor is further configured to associate the SM back-off time value for use with PLMNs in the EPLMN list.
11. The apparatus of clause 9, wherein the processor is further configured to, for the PLMN of the first indication, wait until a timer running the SM back-off time value is stopped or expires before initiating a session management procedure for the S-NSSAI.
12. The apparatus of clause 11, wherein the processor is further configured to, for a different PLMN, disregard the SM back-off time value.
13. The apparatus of clause 9, wherein the first indication of the PLMN and the SM back-off time value further corresponds to a data network name (DNN), and wherein the processor is further configured to:
   if the PLMN of the first indication is selected, wait until a timer running the SM back-off time value is stopped or expires before initiating a session management procedure for the S-NSSAI; and
   if a different PLMN is selected, initiate the session management procedure for the S-NSSAI without waiting for the timer running the SM back-off time value to stop or expire.
14. The apparatus of clause 9, wherein the first indication of the PLMN comprises one or more PLMN identifiers (IDs).
15. The apparatus of clause 9, wherein the first indication of the PLMN identifies a visited PLMN (VPLMN).
16. The apparatus of clause 9, wherein the first indication of the PLMN identifies a home PLMN (HPLMN).
17. The apparatus of clause 9, wherein the NAS SM response message comprises a protocol data unit (PDU) session establishment reject message.
18. The apparatus of clause 9, wherein the NAS SM response message comprises a protocol data unit (PDU) session modification reject message.
19. The apparatus of clause 9, wherein the NAS SM response message is received from a session management function (SMF).
20. The apparatus of clause 9, wherein the NAS SM response message is encapsulated in a downlink (DL) NAS transport message received from an access and mobility management function (AMF).
21. A method for an access and mobility management function (AMF), the method comprising:
   determining that a single network slice selection assistance information (S-NSSAI) is congested for non-access stratum (NAS) signaling;
   generating a NAS downlink (DL) transport message comprising a first indication of a public land mobile network (PLMN) and a session management (SM) back-off time value corresponding to the S-NSSAI; and
   sending the NAS DL transport message to a user equipment (UE).
22. The method of clause 21, wherein the NAS DL transport message carries a NAS session management message to reject an SM request message from the UE.
23. The method of clause 21, wherein the NAS DL transport message further indicates that the first indication of the PLMN and the SM back-off time value are associated with a data network name (DNN).
24. The method of clause 21, wherein the NAS DL transport message further comprises a second indication of equivalent PLMN (EPLMN) applicability, wherein the second indication of EPLMN applicability indicates whether the back-off time value applies to an EPLMN list.
25. The method of clause 21, wherein the first indication of the PLMN comprises one or more PLMN identifiers (IDs).
26. The method of clause 21, wherein the first indication of the PLMN identifies a visited PLMN (VPLMN).
27. The method of clause 21, wherein the first indication of the PLMN identifies a home PLMN (HPLMN).

## Claims

1. An apparatus of a New Radio (NR) User Equipment (UE), the apparatus including a processing circuitry and a radio frequency (RF) circuitry interface to couple the processing circuitry to an RF circuitry of the UE, the processing circuitry to:
encode a Protocol Data Unit (PDU) Session Establishment Request message;
send the PDU Session Establishment Request message for transmission to a session management function (SMF);
decode a PDU Session Establishment Reject message from the SMF, the PDU Session Establishment Reject message in response to the PDU Session Establishment Request message and including a back-off timer associated with a single network slice selection assistance information (S-NSSAI), and an indication of a PLMN that is associated with the back-off timer; and
apply the back-off timer based on the indication.

2. The apparatus of claim 1, wherein the PLMN that is associated with the back-off timer is a virtual PLMN (VPLMN).

3. The apparatus of any one of claims 1-2, wherein the back-off timer is associated with the S-NSSAI and with a data network name (DNN).

4. The apparatus of claim 1, wherein the PDU Session Establishment Request message is associated with a public land management network (PLMN).
